# EUROPEAN PATENT APPLICATION

(11) **EP 4 841 844 A1**
(43) Date of publication of application: **18.11.2026**
(21) Application number: 26175514.4
(22) Date of filing: 29.04.2026
(51) Int. Cl.: H02H 7/12, H02J 4/00, H01H 39/00, H02H 7/26

(54) **POWER SYSTEM BASED ON PYRO-FUSE AND CONTROL METHOD THEREOF**

(30) Priority: 14.05.2025 CN 202510618898
(71) Applicant: ABB E-mobility B.V., 2629 JG Delft (NL)
(72) Inventor: ZHANG, Felix-Fan, Shenzhen, 518118 (CN); YUEN, Ken-KuenFaat, Hong Kong, 000000 (CN); ZHANG, XiYong, ShenZhen, 518010 (CN); LUO, Liu, Shenzhen, 518071 (CN)
(74) Representative: Zimmermann & Partner Patentanwälte mbB

(57) **Abstract**

The present disclosure relates to power system and control method thereof, specifically to power system based on pyro-fuse and control method thereof. In some embodiments, a power system based on pyro-fuse includes an alternating current - direct current (AC-DC) conversion system configured to convert an AC power from a power grid into a first DC power; a DC bus configured to transmit the first DC power; a plurality of DC-DC conversion systems configured to convert the first DC power into a second DC power; one or more pyro-fuses arranged between the DC bus and the AC-DC conversion system and/or the DC-DC conversion system, the pyro-fuse disconnects the AC-DC conversion system and/or the DC-DC conversion system from the DC bus when blown. The power system based on pyro-fuse according to the disclosed embodiments may improve system level operational efficiency and performance at a lower cost.

## Description

### Cross-Reference To Related Application

This application claims the priority of Chinese patent application No. 2025106188987, filed on May 14, 2025, the entire contents of which are hereby incorporated herein by reference.

### Technical Field

The present disclosure generally relates to power system, and more specifically, to power system based on pyro-fuse and control method thereof.

### Background

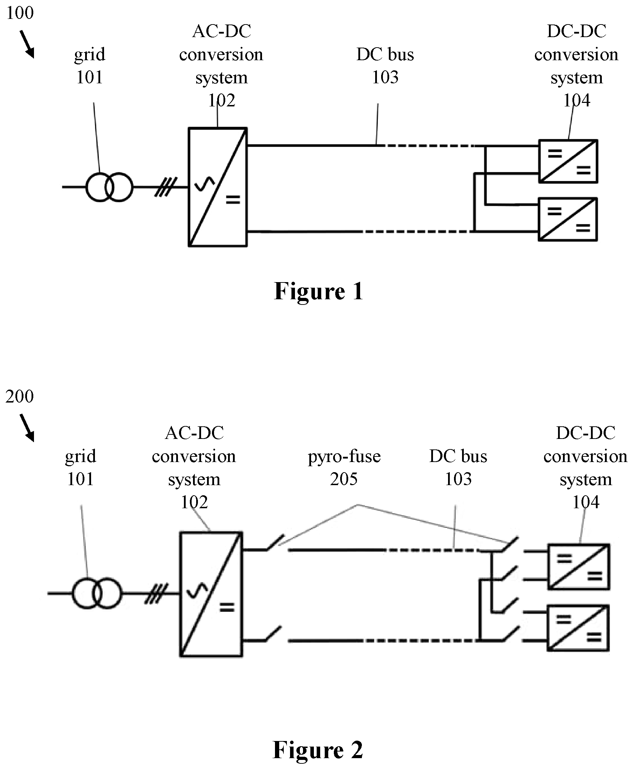

The reliability of electric vehicle (EV) charging stations is becoming increasingly strict, especially for so-called supercharging stations or megawatt (MW) charging stations. Similar to the so-called direct current (DC) micro grid structure, in a charging system using a DC split structure, one or more independent direct current buses (also known as DC buses) are used to separate the alternating current - direct current conversion system (also known as AC-DC conversion system, AC-DC conversion group) from the direct current - direct current conversion system (also known as DC-DC conversion system, DC-DC conversion group). Figure 1 illustrates a block diagram of a simplified DC split structure power system 100. As illustrated in Figure 1, the power system 100 includes: a power grid 101, an AC-DC conversion system 102 configured to convert AC power from the power grid 101 into DC power or vice versa, a DC bus 103, and a DC-DC conversion system 104 configured to perform DC level conversion, wherein the AC-DC conversion system 102 is separated from the DC-DC conversion system 104 through the DC bus 103. Compared with the so-called all-in-one structure, the DC split structure has the advantage of flexible configuration, but it also brings some challenges to protection, especially short-circuit protection. Regarding short-circuit protection, the mainstream method for DC split structure power systems is to use power semiconductors (such as insulated gate bipolar transistors (IGBT), integrated gate commutated thyristors (IGCT), metal oxide semiconductor field-effect transistors (MOSFET), etc.) for active control in the AC-DC conversion system 102 and/or the DC-DC conversion system 104 according to different operating voltages. For example, in the power system 100 illustrated in Figure 1, short-circuit protection is achieved by arranging protective switches (not illustrated) within the AC-DC conversion system 102 or DC-DC conversion system 104.

Pyro-fuse (or pyro fuse), also known as high-temperature fuse, or pyro-switch (or pyro switch), also known as high-temperature switch, has been validated for its fast response capability and reliability over the years. The pyro-fuse is becoming increasingly popular in DC systems, for example, with reference to patent documents such as US12012006B2, EP2293345A2, US20230067133A1, US11845358B2, US12009655B2, US11664652B2, the pyro-fuse is used in electric vehicle (EV) battery management systems and energy storage systems (ESS). Pyro-fuse is a protective device that integrates a fireworks type disconnect structure and a fuse type arc extinguishing structure. Basically, the working principle of a pyro-fuse is as follows: in steady state, the pyrotechnic structure maintains conductivity across the pyro-fuse; when a short circuit occurs, the fuse signal of the pyro-fuse appears, causing the pyrotechnic structure to explode and disconnect. Then, the arc extinguishing structure begins to absorb all the arc energy across the circuit. The arc energy may be absorbed by the pyro-fuse, which allows for the breaking ability of the pyro-fuse.

### Summary

However, the DC split structure with long DC bus makes the system short-circuit protection solution complex in different configurations of power stations or at different rated powers. IGBT based solutions similar to active power semiconductor switches are suitable for these applications with fast response, active control, and reusability in practical applications. However, these protective switches are only used inside AC-DC conversion systems or DC-DC conversion systems, and there is also a disadvantage of power loss. Therefore, the key challenge of a DC split system is how to provide a cost-effective, proactive, intelligent, and reliable solution.

In view of the above, the disclosed embodiments propose power system based on pyro-fuse (also known as a pyro-switch) and control method thereof. In particular, the power system based on pyro-fuse according to the disclosed embodiments may improve system level operational efficiency and performance at a lower cost.

According to the first aspect of the present disclosure, there provides a power system based on pyro-fuse, comprising: an alternating current - direct current (AC-DC) conversion system configured to convert an AC power from a power grid into a first DC power, and/or convert the first DC power into an AC power; a direct current (DC) bus configured to transmit the first DC power; a direct current - direct current (DC-DC) conversion system configured to convert the first DC power into a second DC power, and/or convert the second DC power into the first DC power; and one or more pyro-fuses arranged between the DC bus and the AC-DC conversion system and/or the DC-DC conversion system, wherein the pyro-fuse disconnects the AC-DC conversion system and/or the DC-DC conversion system from the DC bus when blown.

In some embodiments, the power system further comprising: an energy storage system configured to store the first DC power from the DC bus and/or supply power to the DC bus, wherein the pyro-fuse is arranged between the DC bus and the energy storage system, and the pyro-fuse disconnects the energy storage system from the DC bus when blown.

In some embodiments, the pyro-fuse is arranged on the DC bus; and/or the pyro-fuse is arranged on a coupling line between the DC bus and the AC-DC conversion system, the DC-DC conversion system, or the energy storage system.

In some embodiments, the AC-DC conversion system comprises a plurality of AC-DC conversion units connected in parallel, wherein, within the AC-DC conversion system, a unit protection device is included on the DC bus side of the AC-DC conversion unit, and the unit protection device is a pyro-fuse, a general-purpose fuse, or a power semiconductor.

In some embodiments, the power system further comprising: a power bridge connected in parallel with one or more of the AC-DC conversion units and configured to bypass one or more of the AC-DC conversion units.

In some embodiments, the DC-DC conversion system comprises a plurality of DC-DC conversion units connected in parallel, wherein, within the DC-DC conversion system, a unit protection device is included on the DC bus side of the DC-DC conversion unit, and the unit protection device is a pyro-fuse, a general-purpose fuse, or a power semiconductor.

In some embodiments, the DC bus comprises a positive DC bus (DC+) and a negative DC bus (DC-), wherein the pyro-fuse is arranged between the positive DC bus and the AC-DC conversion system and/or the DC-DC conversion system, and/or between the negative DC bus and the AC-DC conversion system and/or the DC-DC conversion system.

In some embodiments, the power system comprises a plurality of AC-DC conversion systems, and/or the power system comprises a plurality of DC-DC conversion systems.

In some embodiments, the second DC power is used for charging electric vehicles; the power system is used for electric vehicle charging stations.

In some embodiments, the power system further comprising: a current sensing unit configured to detect an overcurrent state at the pyro-fuse; a pyro-fuse control unit configured to generate a fuse signal in response to the overcurrent state received from the current sensing unit; and/or a communication unit configured to transmit the overcurrent state and/or the fuse signal.

In some embodiments, the pyro-fuse control unit is a system controller or communicates with a system controller, and/or the communication unit comprises a low-speed communication bus and a high-speed communication bus.

According to the second aspect of the present disclosure, there provides a control method for a power system based on pyro-fuse, wherein the power system comprises one or more pyro-fuses arranged between a DC bus and an AC-DC conversion system and/or a DC-DC conversion system, the method comprising: receiving a trigger signal from a communication unit; generating a fuse signal in response to the trigger signal; and sending the fuse signal to the pyro-fuse.

In some embodiments, the trigger signal comprises: a system command, a fault logic state, and an overcurrent state sensed by a current sensing unit.

In some embodiments, generating the fuse signal comprises: applying a waiting time, after receiving the trigger signal from the communication unit; and generating the fuse signal, if a trigger signal from the communication unit is received again after the waiting time.

In some embodiments, the control method is performed in a pyro-fuse control unit.

In some embodiments, the pyro-fuse control unit is a system controller or communicates with a system controller, and/or the communication unit comprises a low-speed communication bus and a high-speed communication bus.

According to the third aspect of the present disclosure, there provides a control apparatus comprising: a processing unit; and a memory unit having stored thereon instructions that, when executed on the processing unit, cause the processing unit to be configured to perform any of the above method.

According to the fourth aspect of the present disclosure, there provides a computer-readable storage medium having stored thereon instructions that, when executed on a processing unit, cause the processing unit to perform any of the above method.

According to the fifth aspect of the present disclosure, there provides a computer program product having stored thereon instructions that, when executed on a processing unit, cause the processing unit to perform any of the above method.

According to the disclosed embodiments, a short-circuit protection solution based on pyro-switch technology may be provided, which may integrate active control hardware, software, communication, and intelligent strategies. Through the disclosed embodiments, an intelligent, flexible, and cost-effective short-circuit protection solution has been implemented for a DC split structure system. According to the disclosed embodiments, one or more of the following advantages may be achieved:
- low cost of DC distribution system;
- adopting proactive and intelligent control strategies;
- lower power consumption compared to protection devices based on power semiconductors;
- fast response performance compared with passive protection devices.

### Brief Description of the Drawings

In the following description of the exemplary embodiments in conjunction with the accompanying drawings, more details, features, and advantages of the present disclosure are disclosed. In the accompanying drawings:
Figure 1 schematically illustrates a schematic diagram of a power system with a DC split structure;
Figure 2 schematically illustrates a schematic diagram of a power system based on a pyro-fuse according to an embodiment of the present disclosure;
Figures 3A to 3C schematically illustrate a power system based on a pyro-fuse according to an embodiment of the present disclosure;
Figures 4A to 4D schematically illustrate a power system based on a pyro-fuse according to an embodiment of the present disclosure;
Figures 5A-5C schematically illustrate the AC-DC conversion system in a power system based on a pyro-fuse according to an embodiment of the present disclosure;
Figure 6A schematically illustrates various units in a power system based on a pyro-fuse according to an embodiment of the present disclosure;
Figures 6B to 6D schematically illustrate the communication arrangement in a power system based on a pyro-fuse according to an embodiment of the present disclosure;
Figures 7A to 7C schematically illustrate the control process of a power system based on a pyro-fuse according to an embodiment of the present disclosure;
Figure 7D schematically illustrates the fuse driving signal of a power system based on a pyro-fuse according to an embodiment of the present disclosure;
Figure 8 schematically illustrates a schematic diagram of a pyro-fuse control unit according to an embodiment of the present disclosure;
Figure 9 schematically illustrates the hardware implementation of a pyro-fuse device according to an embodiment of the present disclosure; and
Figures 10A-10B schematically illustrate the control strategy of the pyro-fuse according to the disclosed embodiments.

### Detailed Description of Embodiments

The following text will describe in detail the embodiments herein with reference to the accompanying drawings, which illustrate the disclosed embodiments. However, these embodiments herein may be embodied in many different forms and should not be interpreted as limited to the embodiments described herein. The elements in the accompanying drawings may not be drawn to scale relative to each other.

The references to "one embodiment", "an embodiment", and "example embodiment" in the specification indicate that the described embodiment may include a specific feature, structure, or characteristic, but not each embodiment must include that specific feature, structure, or characteristic. Furthermore, these phrases may not necessarily refer to the same embodiment. Furthermore, when describing a specific feature, structure, or characteristic in conjunction with an embodiment, those skilled in the art will appreciate that it is within their knowledge to influence the feature, structure, or characteristic in conjunction with other embodiments (whether explicitly described or not).

It should be understood that although the terms "first" and "second" etc. may be used herein to describe various elements, these elements should not be limited by these terms. These terms are only used to distinguish one element from another. For example, without departing from the scope of the exemplary embodiments, the first element may be referred to as the second element, and similarly, the second element may be referred to as the first element. As used herein, the term "and/or" includes any and all combinations of one or more listed terms.

Unless otherwise specified, the use of "at least one of A and B" or "at least one of A or B" herein should be understood as either "only A, only B, or both A and B".

The terms used herein are only intended to describe specific embodiments and are not intended to limit example embodiments. Unless otherwise explicitly indicated in the context, the singular forms "a", "an", and "the" used herein also include the plural form. It should also be understood that the terms "comprising", "including", "containing", "having", "possessing" and any variations thereof when used herein specify the presence of the described feature, element, and/or component, but do not exclude the presence or addition of one or more other features, elements, components, and/or combinations thereof.

Herein, "coupling" and "connection" and any variations thereof refer to direct and indirect connections, which may be coupled or connected through one or more intermediate components.

Note that the terms used herein are only for the purpose of describing and distinguishing nodes, devices, or networks. With the development of technology, other terms with similar/identical meanings may also be used. In the following description and claims, unless otherwise defined, all technical and scientific terms used herein have the same meanings as those commonly understood by those skilled in the art to which this disclosure relates.

The DC split electric system ("split" means separation of AC-DC conversion parts and DC-DC conversion parts with an independent long DC bus) have always been a challenge in industry. For high or medium voltage systems with DC bus voltages up to tens or hundreds of kilovolts, high-voltage high-capacity power semiconductors such as IGCT or gate turn off thyristors (GTOs) are used to actively and accurately control short-circuit time and arc energy to ensure system stability.

In recent years, low-voltage DC systems with DC bus of around 1 kV have also been popular in new energy related applications, such as solar energy systems, energy storage systems, electric vehicle battery management systems, and electric vehicle charging systems.

For electric vehicle charging applications, the use of DC split structure is still relatively rare. This structure separates the AC-DC conversion system from the DC-DC conversion system, especially in the case of long DC bus. In the DC split structure with a long DC bus, a protection scheme based on IGBT active power semiconductor switches may be used. However, these protective switches are only used within AC-DC conversion systems or within DC-DC conversion systems, and there is also a disadvantage of power loss. Therefore, the key challenge of a DC split system is how to provide a cost-effective, proactive, intelligent, and reliable solution.

In view of the above, the disclosed embodiments propose a novel, cost-effective, active, intelligent, and reliable short-circuit protection solution for a DC split system, which integrates hardware and/or software technology based on a pyro switch or so-called pyro-fuse.

Figure 2 schematically illustrates a power system 200 based on a pyro-fuse according to an embodiment of the present disclosure. In an embodiment, as illustrated in Figure 2, the power system 200 includes an alternating current - direct current conversion system (an AC-DC conversion system 102) configured to convert an AC power from grid 101 into a DC power (also known as the first DC power). In an embodiment, the AC-DC conversion system 102 may also conversely convert the first DC power into the AC power. For example, the AC-DC conversion system 102 may include a rectifier (such as a rectifier bridge) that converts the AC power from the grid to the DC power and/or may include an inverter that converts the first DC power to the AC power.

In an embodiment, as illustrated in Figure 2, the power system 200 may also include a DC-DC conversion system (a DC-DC conversion system 104). In an embodiment, the DC-DC conversion system converts the first DC power into a second DC power, such as for driving a load or charging an electric vehicle (EV). In an embodiment, the DC-DC conversion system may also convert the second DC power into the first DC power, for example, by discharging the energy stored in the battery externally.

In an embodiment, as illustrated in Figure 2, the power system 200 may further include a direct current bus (a DC bus 103) that couples the AC-DC conversion system 102 and the DC-DC conversion system 104 for transmitting the first DC power. Through the DC bus 103, the power system 200 may be configured as a DC split structure.

In an embodiment, as illustrated in Figure 2, the power system 200 may further include one or more pyro-fuses 205. In an embodiment, the pyro-fuse 205 may be arranged between the DC bus 103 and the AC-DC conversion system 102 and/or the DC-DC conversion system 104, as illustrated in Figure 2. When the pyro-fuse 205 is in a steady state, the pyrotechnic structure remains conductive across both ends. When the pyro-fuse signal appears (such as due to a short circuit), the pyrotechnic structure explodes and remains disconnected across both ends. As a result, the pyro-fuse melts and disconnects the AC-DC conversion system 102 and/or the DC-DC conversion system 104 from the DC bus 103. In an embodiment, the pyro-fuse 205 may be arranged on the DC bus 103. In an embodiment, the pyro-fuse 205 may be arranged on a coupling line (or a connection line) between the AC-DC conversion system 102 and/or the DC-DC conversion system 104 and the DC bus 103.

In an embodiment, the AC-DC conversion system 102 and the DC-DC conversion system 104 in the DC split system may each include multiple AC-DC conversion units and multiple DC-DC conversion units respectively. For example, in an embodiment, as illustrated in Figure 2, the DC-DC conversion system 104 may include two direct current - direct current conversion units (DC-DC conversion units). The pyro-fuse 205 may be arranged between each DC-DC conversion unit and the DC bus 103.

In an embodiment, the power system 200 may be applied to electric vehicle charging systems, solar energy, energy storage systems, industrial applications, and other similar DC split structure systems. For example, the power system 200 may be applied to electric vehicle charging station(s), where each DC-DC conversion unit may be configured as a separate charging station. In addition, the power system 200 may also be applied to other scenarios, such as ships, vertical takeoff vehicles, etc.

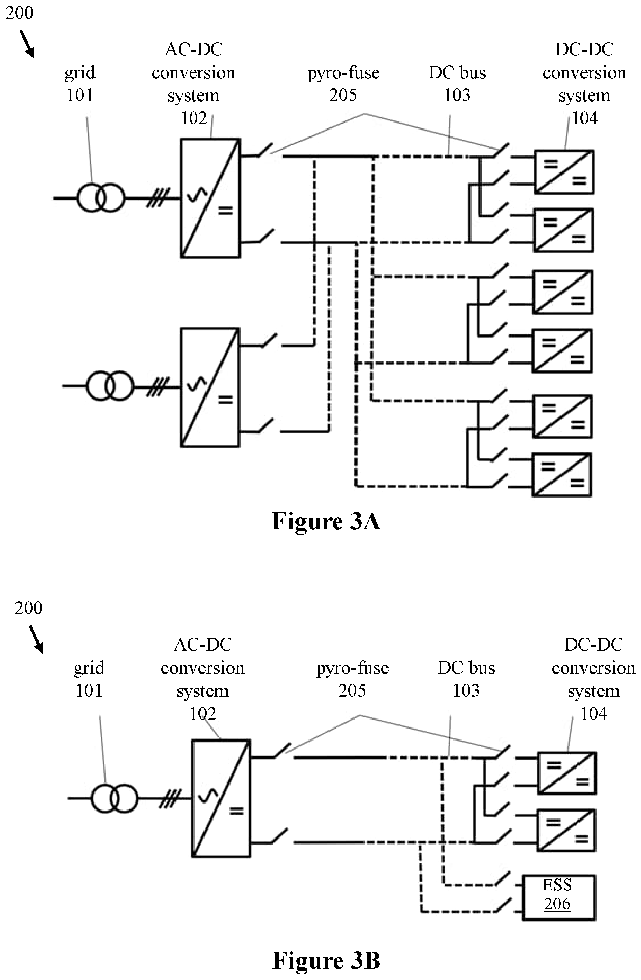

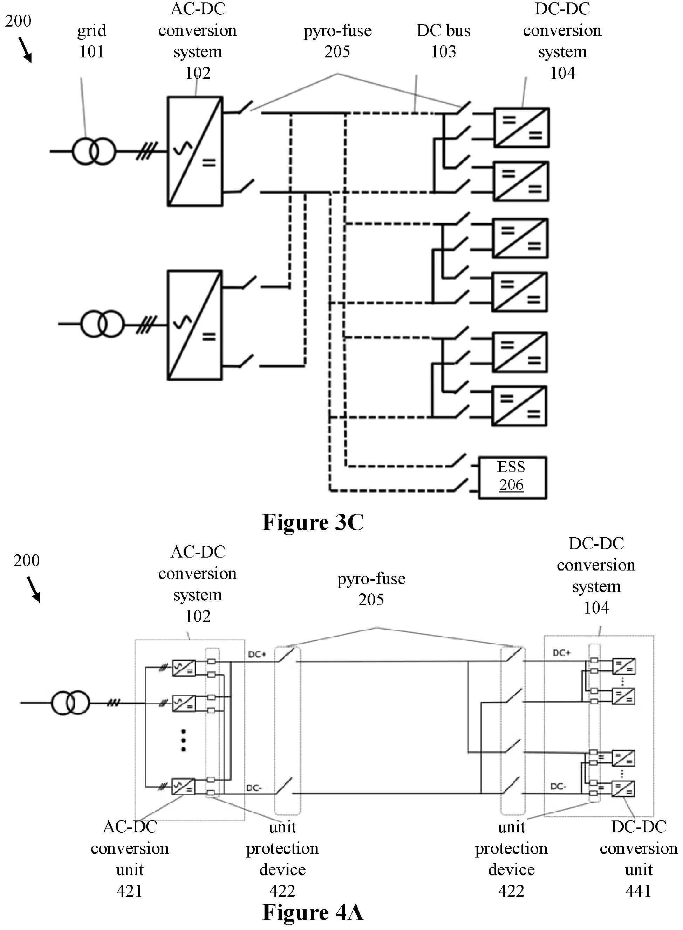

Figures 3A to 3C schematically illustrate a power system 200 based on a pyro-fuse according to an embodiment of the present disclosure. In an embodiment, as illustrated in Figures 3A and 3C, the power system 200 includes two AC-DC conversion systems 102. In addition, as illustrated in Figures 3A and 3C, the power system 200 includes three DC-DC conversion systems 104. In an embodiment, the pyro-fuse 205 may be arranged between each AC-DC conversion system 102 and the DC bus 103, and/or may be arranged between each DC-DC conversion system 104 and the DC bus 103.

In an embodiment, as illustrated in Figures 3B and 3C, the power system 200 includes an energy storage system (ESS) 206. The energy storage system 206 may store power from the DC bus 103 and/or supply power to the DC bus 103. In an embodiment, the pyro-fuse 205 may be arranged between the energy storage system 206 and the DC bus 103. It should be noted that the pyro-fuse 205 may not be arranged between the energy storage system 206 and the DC bus 103.

Figures 4A-4D schematically illustrate a power system 200 based on a pyro-fuse according to an embodiment of the present disclosure. As illustrated in Figure 4A, in the power system 200, the pyro-fuse 205 is applied to the system DC bus 103, that is, it is arranged outside the AC-DC conversion system 102 and/or the DC-DC conversion system 104; while inside the AC-DC conversion system 102 and/or DC-DC conversion system 104, there may not be a pyro-fuse 205. For example, as illustrated in Figure 4A, the AC-DC conversion system 102 may include a plurality of alternating current - direct current conversion units (AC-DC conversion unit 421) connected in parallel. Inside the AC-DC conversion system 102, a unit protection device 422 is included on the side of the AC-DC conversion unit 421 adjacent to the DC bus 103, i.e., the DC bus 103 side of the AC-DC conversion unit 421. In an embodiment, the unit protection device 422 is not limited to the side of the AC-DC conversion unit 421 adjacent to the DC bus 103, and may be arranged at any position of the AC-DC conversion unit 421. In an embodiment, as illustrated in Figure 4A, the unit protection device 422 may be a power semiconductor such as conventional general-purpose fuse, IGBT. In an embodiment, the unit protection device 422 may be any fuse device or component.

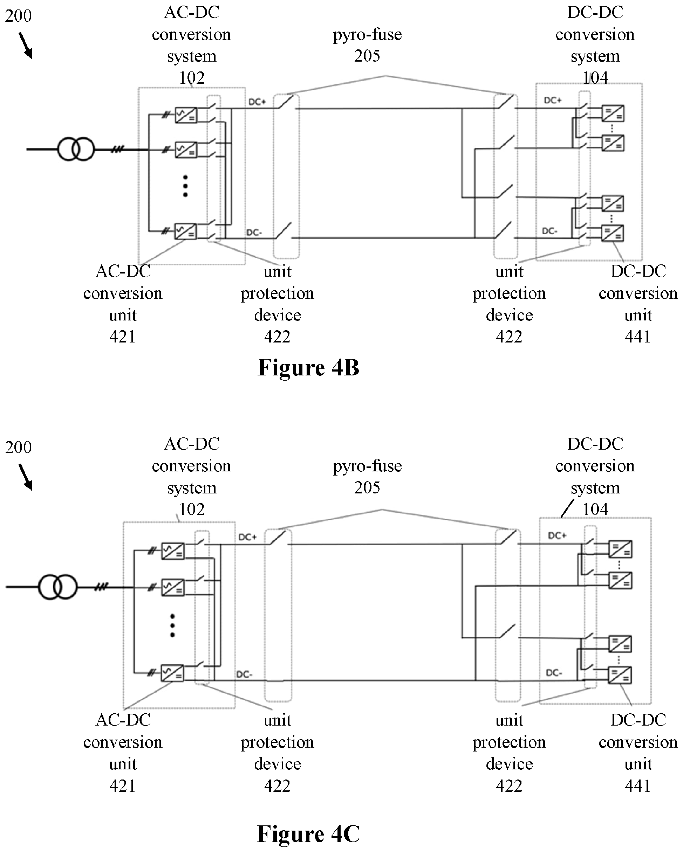

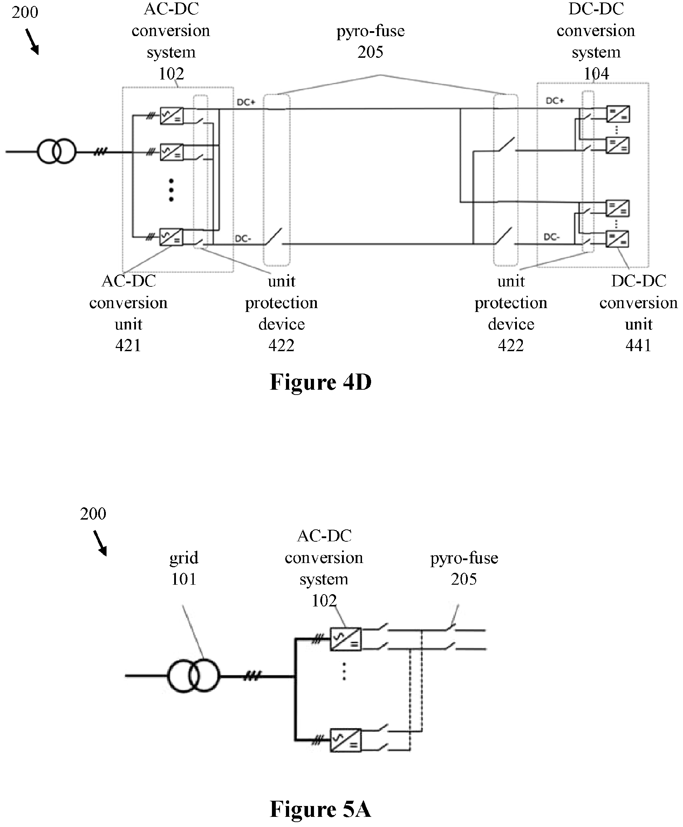

In an embodiment, as illustrated in Figures 4B, 4C, and 4D, in the power system 200, the pyro-fuse 205 is not only applied to the system DC bus 103, that is being arranged outside the AC-DC conversion system 102 and/or the DC-DC conversion system 104; but also the pyro-fuse 205 is used as a unit protection device 422 inside the AC-DC conversion system 102 and/or the DC-DC conversion system 104.

The DC bus 103 may include a pair of DC buses, namely a positive DC bus (DC+) and a negative DC bus (DC-). The pyro-switch(s) may be applied to the positive, negative, or both sides of the DC bus in the DC split system. In an embodiment, as illustrated in Figure 4B, the pyro-fuse 205 may be arranged between the positive DC bus and the AC-DC conversion system 102 and/or the DC-DC conversion system 104, as well as between the negative DC bus and the AC-DC conversion system 102 and/or the DC-DC conversion system 104; including the exterior and interior of the AC-DC conversion system 102 and/or the DC-DC conversion system 104.

In an embodiment, as illustrated in Figure 4C, the pyro-fuse 205 may be arranged between the positive DC bus and the AC-DC conversion system 102 and/or the DC-DC conversion system 104, including the exterior and interior of the AC-DC conversion system 102 and/or the DC-DC conversion system 104.

In an embodiment, as illustrated in Figure 4D, the pyro-fuse 205 may be arranged between the negative DC bus and the AC-DC conversion system 102 and/or the DC-DC conversion system 104, including the exterior and interior of the AC-DC conversion system 102 and/or the DC-DC conversion system 104.

In an embodiment, as illustrated in Figures 4A-4D, the DC-DC conversion unit 441 (also known as the DC-DC power unit) may typically be an isolated or non-isolated DC-DC power converter, with or without unit protection devices on the closed DC bus side. The topology of the DC-DC conversion unit 441 may be a two-level or multi-level, unidirectional or bidirectional DC-DC stage, such as a resonant converter or a dual active bridge converter. As illustrated in Figures 4A-4D, in the power system 200, the unit protection device 422 may be a power semiconductor switch (such as IGBT) or a conventional passive device (such as a fast fuse), or even a pyro-switch (such as an actively controlled pyro-fuse 205).

Figures 5A-5C schematically illustrate the AC-DC conversion system in a power system 200 based on a pyro-fuse according to an embodiment of the present disclosure. In some embodiments, the AC-DC conversion unit 421 (also known as the AC-DC power unit) may typically be an isolated or non-isolated three-phase AC-DC power converter, with or without unit protection devices on the closed DC bus side. The topology of the AC-DC power equipment may be a two-level, multi-level three-phase rectifier or inverter, or even a bidirectional two-level or three-level three-phase inverter. As illustrated in Figure 5A and referring to the above Figures 4A to 4D, in the power system 200, the unit protection device 422 may be a power semiconductor switch (such as IGBT) or a conventional passive device (such as a fast fuse), or even a pyro-switch (such as an actively controlled pyro-fuse 205).

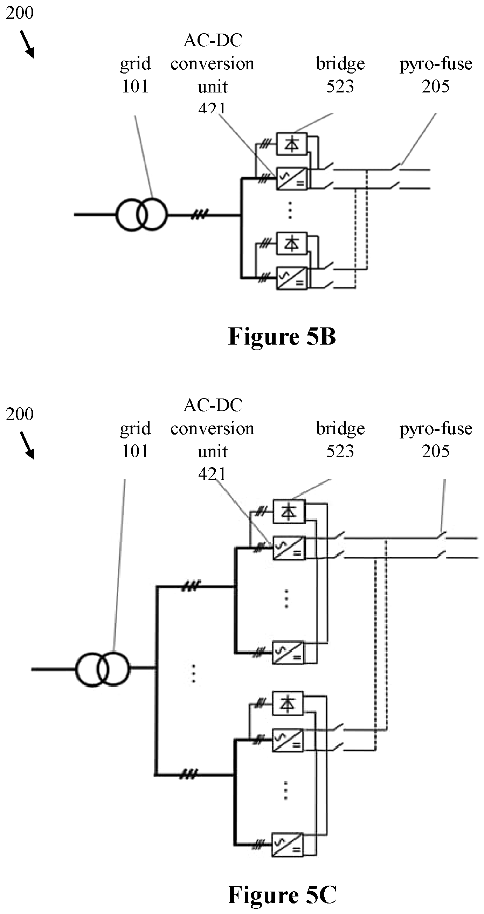

In an embodiment, as illustrated in Figure 5B, the AC-DC conversion unit 421 may sometimes be bypassed with a protective device (such as a bridge 523) to cope with the inrush current stress passing through the active switches inside the power converter. For example, in an embodiment, as illustrated in Figure 5B, the bridge 523 is connected in parallel with the AC-DC conversion unit 421. When the current flowing through the AC-DC conversion unit 421 is large, the bridge 523 (such as a three-phase power diode bridge) may be used to make most of the current flow through the bridge 523, thereby protecting the AC-DC conversion unit 421.

In an embodiment, as illustrated in Figure 5C, the bridge 523 is connected in parallel with multiple AC-DC conversion units 421. When the current flowing through any of the multiple AC-DC conversion units 421 is large, the bridge 523 (such as a three-phase power diode bridge) may be used to make most of the current flow through the bridge 523, thereby protecting multiple AC-DC conversion units 421. In an embodiment, a bridge 523 may be configured for an AC-DC conversion system 102, that is, the bridge 523 is connected in parallel with all AC-DC conversion units 421 within the AC-DC conversion system 102.

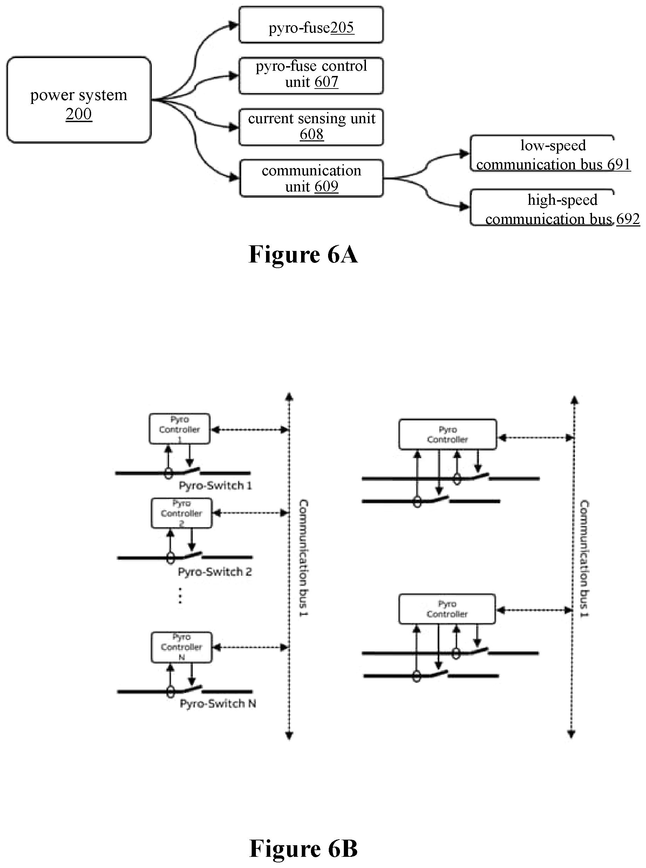

Figure 6A schematically illustrates various units in a power system 200 based on a pyro-fuse according to an embodiment of the present disclosure, which may be used to implement a control method for the power system 200. In an embodiment, as illustrated in Figure 6A, the power system 200 may include a pyro-fuse 205 (pyro-switch unit) as described above, a pyro-fuse control unit (also generally referred to as "control unit") 607, a current sensing unit 608, and a communication unit 609. In an embodiment, the power system 200 may also include other sensing units not illustrated.

In an embodiment, the pyro-fuse 205 may be a standard pyro-fuse product on the market, or a special pyrotechnic switch (pyro-switch) device with arc extinguishing and rapid response capabilities. Typically, the response time or action time of the proposed pyro-switch device may be approximately 1 millisecond or less than 3 milliseconds.

In an embodiment, the pyro-fuse control unit (or pyro-switch control unit) 607 may be a central control unit that combines a series of analog and digital functional circuits, such as a microcontroller unit (MCU), digital signal processor (DSP), field programmable gate array (FPGA), or embedded control system.

In an embodiment, the current sensing unit 608 may be a current sensing unit based on different technologies, such as a current transformer, Hall effect sensor, or shunt resistor. In an embodiment, the current sensing unit 608 may be equivalently replaced with other sensing units.

Figures 6B to 6D schematically illustrate the communication arrangement in a power system based on a pyro-fuse according to an embodiment of the present disclosure. In an embodiment, the communication unit 609 may be a high-speed communication bus 692 (communication bus 1 as illustrated in Figures 6B to 6D) or a low-speed communication bus 691 (communication bus 2 as illustrated in Figures 6B to 6D), or a combination of both.

In an embodiment, the communication architecture configuration illustrated in Figure 6A is flexible. For example, the number and location of the low-speed communication bus 691 (communication bus 2 illustrated in Figures 6B to 6D) and the high-speed communication bus 692 (communication bus 1 illustrated in Figures 6B to 6D) may be configured arbitrarily. That is, the configuration of any unit is flexible, such as the number and position of the pyro-fuse control unit 607, the current sensing unit 608, and the pyro-fuse 205.

In an embodiment, as illustrated on the left side of Figure 6B, for a pyro-switch, a pyro-fuse control unit 607 (also known as a pyro-controller) may be configured. In an embodiment, as illustrated on the right side of Figure 6B, a pyro-fuse control unit 607 may control multiple (for example 2, as illustrated) pyro-switches. The pyro-fuse control units 607 may be connected through a communication bus.

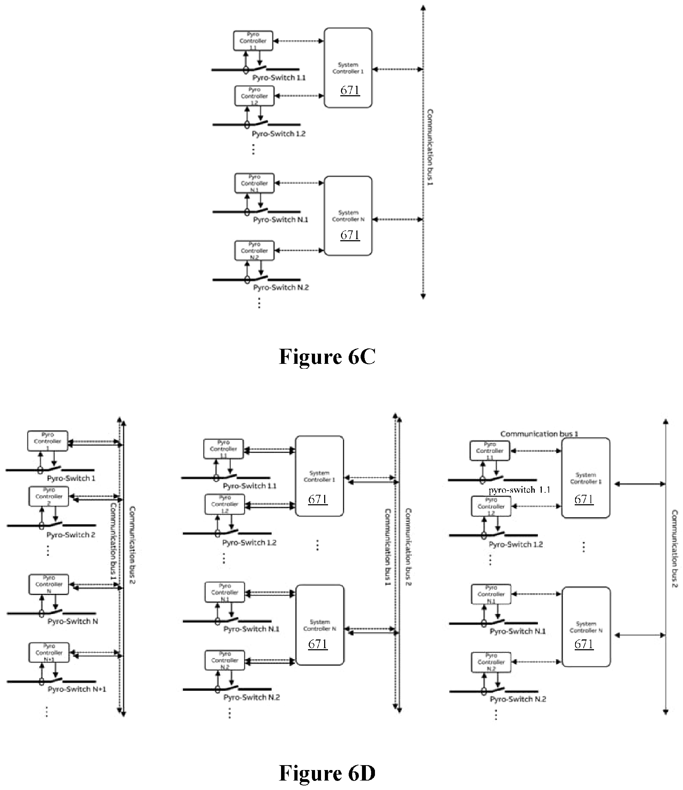

In an embodiment, as illustrated in Figure 6C, multiple pyro-fuse control units 607 may be coupled to the system controller 671. In an embodiment, the system controller 671 may be, for example, a controller within the AC-DC conversion system 102, a controller within the DC-DC conversion system 104, a controller within the ESS system 206, or a system controller within other systems. In an embodiment, the system controller 671 may be a controller controlling different regions, such as controlling all pyro-fuses 205 within a city (at the city or county level), all pyro-fuses 205 within a province (or state) (at the province or state level), or even all pyro-fuses 205 within a country (at the national or regional level).

In an embodiment, as illustrated in Figure 6D, a combination of the high-speed and low-speed communication buses may be used to achieve a balance between information transmission speed and cost. It should be noted that the disclosed embodiments do not limit the number and configuration of the high-speed communication buses and low-speed communication buses.

In an embodiment, the low-speed communication bus 691 primarily focuses on messages between pyrotechnic solutions or messages between pyrotechnic solutions and system level units. The implementation message of the low-speed communication bus is illustrated in Table 1 below.

In an embodiment, the implementation of the low-speed communication bus 691 may be any long-distance and highly reliable communication protocol, such as Controller Area Network (CAN) bus, Ethernet Control Automation Technology (EtherCAT) bus, or Electronics Industry Association EIA-485 bus (also known as RS-485 bus).

**Table 1. Communication message forms on the low-speed communication bus**

| | Communication information for Low Speed Bus |
|---|---|
| Report to system-level | • Unit ID |
| | • Fault status (normal or fault) |
| | • Fault status (more about fault types, i.e. power supply under voltage, pyro-driver fault, ...) |
| | • Activation status (activated, not activated, ...) |
| | • Other related status (To Be Determined (TBD)1, TBD2, ...) |
| Command from system-level | • Enable function mode (enable function of solution, ...) |
| | • Disable function mode (disable function of solution, ...) |
| | • FIRE command (directly fire all pyro-fuses without any other condition) |
| | • Other related command (TBD1, TBD2, ...) |
| Over the Air (OTA) from system-level | • Unit hardware/software version update |
| | • Trigger parameter configuration (Over current threshold) |
| | • Trigger parameter configuration (Blanking time) |
| | • Driver circuit configuration (wake up, trigger time, trigger current, TBD1, TBD2, ...) |
| | • Other related variation (TBD1, TBD2, ...) |

In an embodiment, the high-speed communication bus 692 primarily focuses on fault signals or any other fast response signals required in the implementation. In an embodiment, the high-speed communication bus 692 may be based on fiber optic or hardware logic circuits.

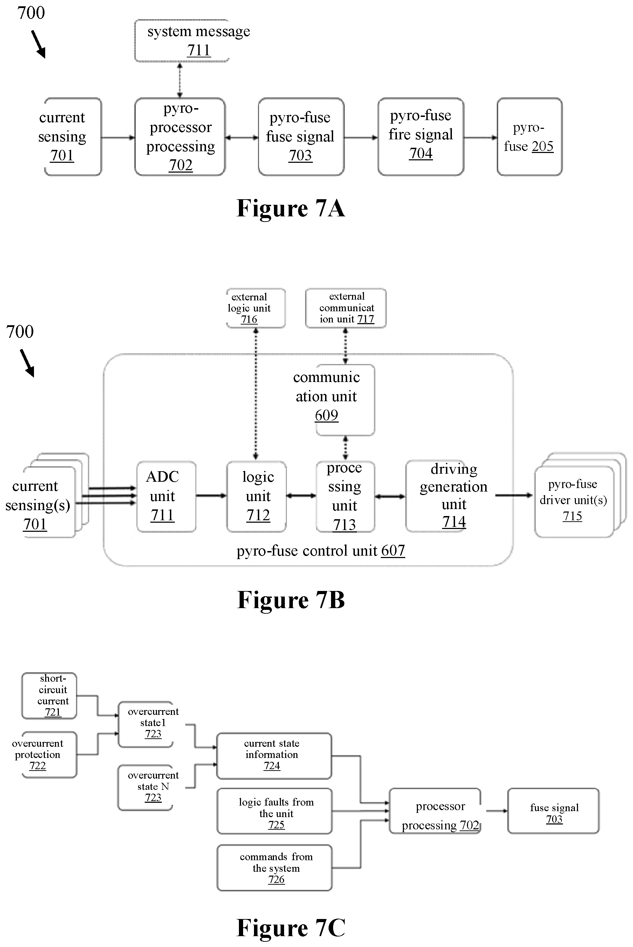

Figure 7A schematically illustrates a control process 700 of a power system based on a pyro-fuse according to an embodiment of the present disclosure. In an embodiment, the control process 700 may include the following steps:
- the current sensing unit 608 sends the current status (the current sensing signal 701) to the pyro-fuse control unit 607;
- the pyro-fuse control unit 607 analyzes the results (pyro-processor processing 702) and sends a signal to the pyro-fuse driver (pyro-fuse fuse signal 703); and
- the fuse driver drives (such as modulating the fuse signal 703) to fire the pyro-fuse 205 (pyro-fuse fire signal 704), disconnecting the power system 200 from the fault location.

In an embodiment, alternatively or additionally, the pyro-fuse control unit 607 may also generate a fuse signal based on system message 711 (e.g., a system message from the system controller). In an embodiment, the signals that may trigger the fusing of the pyro-fuse, such as the fusing signal sent to the pyro-fuse driver and the fire signal after driving the pyro-fuse driver, are collectively referred to as "fuse signals". The signals that may trigger the generation of the fusing signal to seek circuit protection, such as current sensing signals and system messages, are collectively referred to as "triggering signals" (alternatively, they may also be referred to as "protection signals", "protection triggering signals", "trigger protection signals").

Figure 7B schematically illustrates a control process 700 of a power system based on a pyro-fuse according to an embodiment of the present disclosure. In an embodiment, as illustrated in Figure 7B, the current sensing 701 may include multiple, i.e., the pyro-fuse control unit 607 may receive multiple current sensing signals from the bus, one or more of which may trigger the fuse signal. In addition, multiple pyro-fuse driver units 715 may also be connected to a single pyro-fuse control unit 607 for fusing multiple pyro-fuses 205.

As illustrated in Figure 7B, the pyro-fuse control unit 607 may also include an analog-to-digital conversion unit (ADC unit) 711, which is used to convert the received current sensing signals into digital signals (if necessary). The pyro-fuse control unit 607 may also include a logic unit 712 for detecting logic errors, such as optional external logic unit 716, and generating logic error signals. The pyro-fuse control unit 607 may also include a processing unit 713 for analyzing these trigger signals and optionally generating a fuse signal. The pyro-fuse control unit 607 may also include a driving generation unit 714, which is used to send driving generation signals to one or more pyro-fuse driver units 715 to drive the fusing of the pyro-fuse 205. In addition, the pyro-fuse control unit 607 may also include a communication unit 609 for communicating with an optional external communication unit 717, for example.

Figure 7C schematically illustrates a control process 700 of a power system based on a pyro-fuse according to an embodiment of the present disclosure. In an embodiment, as illustrated in Figure 7C, the trigger source for triggering the pyro-fuse control unit 607 to generate the fuse signal may be any one of overcurrent state, external fault logic state, and system command. As illustrated in Figure 7C, the short-circuit current signal 721 and the overcurrent protection signal 722 may be summarized as overcurrent state 723, and multiple overcurrent states 723 may be summarized as current state information 724. Then this information may be processed by the processor 702 as a trigger signal along with logic faults from the unit 725 and commands from the system 726, and generate a fuse signal 703.

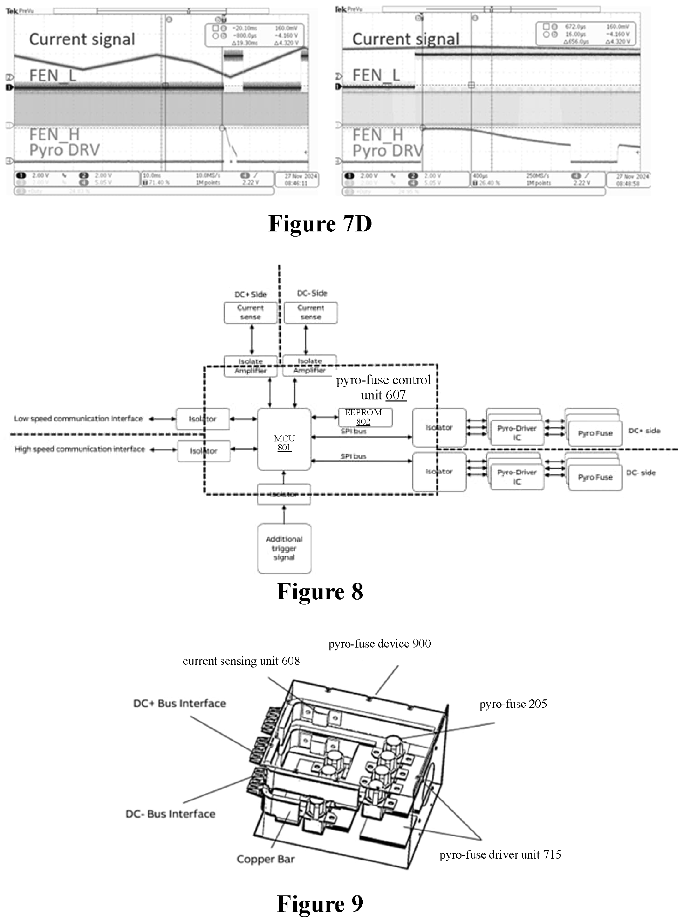

Figure 7D schematically illustrates the fuse driving signal of a power system based on a pyro-fuse according to an embodiment of the present disclosure. In an embodiment, the driving of the fuse signal of the pyro-fuse may be modulated in any form, such as level mode or pulse width modulation (PWM) mode modulation, to improve the reliability of the protection action. Figure 7D illustrates one form of the driving signal. In an embodiment, the illustrated fuse drive signal (Pyro-DRV) is generated by the pyro-fuse driver unit 715.

Figure 8 schematically illustrates a pyro-fuse control unit 607 according to an embodiment of the present disclosure. As illustrated in Figure 8, the pyro-fuse control unit 607 may include a processing unit 801, which may be in the form of a microcontroller unit (MCU), as illustrated. The processing unit may have a memory unit 802, such as an electrically erasable programmable read-only memory (EEPROM), or be coupled to a memory unit 802. The processing unit 801 may be coupled to a driver integrated circuit (IC) through a serial peripheral interface (SPI) bus for driving as illustrated in Figure 7D. In addition, considering industry standards such as electrical safety standards, isolators and other equipment have been arranged in Figure 8.

Figure 9 schematically illustrates the hardware implementation (mechanical implementation) of a pyro-fuse device 900 according to an embodiment of the present disclosure. In an embodiment, as illustrated in Figure 9, considering factors such as cost, size, manufacturing design, and maintenance design, the current sensing unit 608, pyro-fuse driver unit 715, communication unit 609, etc. are all integrated into one box. In addition, it should be understood that one or more pyro-fuse control units 607 may also be configured within the pyro-fuse device 900.

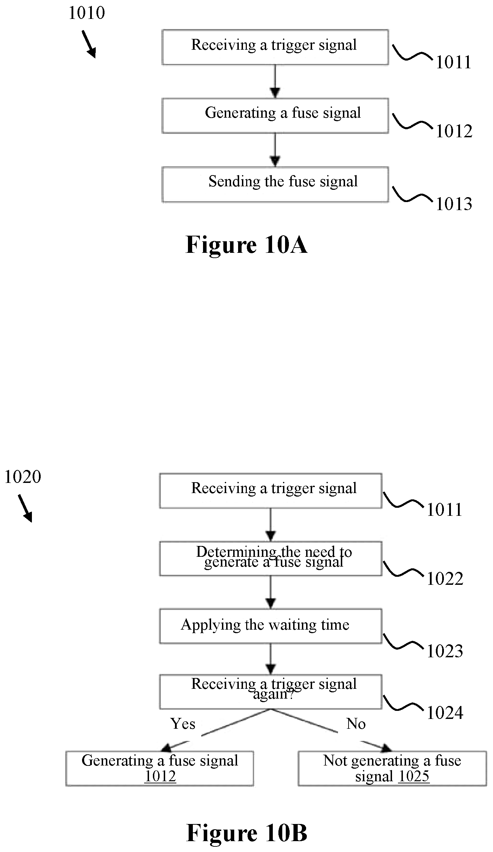

Figures 10A-10B schematically illustrate the control method of a pyro-fuse according to an embodiment of the present disclosure. The control method may be performed in the pyro-fuse control unit 607. In an embodiment, as illustrated in Figure 10A, the control method 1010 includes receiving a trigger signal from the communication interface 609 (step 1011); generating a fuse signal in response to the trigger signal (step 1012); and sending the fuse signal to the pyro-fuse 205 (step 1013).

In an embodiment, considering the different locations of short-circuit faults, different configurations of DC split systems, different characteristics of different protection devices, or different strategies of the system, the control method 1020 may achieve protection selectivity through additional blanking time, also known as waiting time, to cooperate with any power unit level protection device or system level protection device. For example, in the power system 200 illustrated in Figure 5B or Figure 5C, the protective devices such as the bridge 523 are included. In the event of a short circuit, the bridge 523 may be used for shunt, so it is not necessary to disconnect the pyro-fuse 205. Therefore, the waiting time may be used to wait for the action of power units such as bridge 523.

In an embodiment, as illustrated in Figure 10B, the control method 1020 includes: receiving a trigger signal from the communication interface 609 (step 1011); determining the need to generate a fuse signal in response to the trigger signal (step 1022); applying the waiting time (step 1023); determining whether a trigger signal from the communication unit is received again after the waiting time (step 1024); if so, generating a fuse signal (step 1012), otherwise not generating a fuse signal (step 1025).

In an embodiment, the trigger signal may be the overcurrent state sensed by the current sensing unit 608. After receiving the overcurrent state from the current sensing unit 608, the waiting time may be applied. If the overcurrent state from the current sensing unit 608 is received again after the waiting time, a fuse signal is generated.

In an embodiment, the different locations of the short-circuit fault may be the AC side of AC-DC conversion unit 421, the DC side of AC-DC conversion unit 421, the primary side of the DC-DC conversion unit 441, the secondary side of the DC-DC conversion unit 441, etc.

In an embodiment, the different configurations of the DC shunt system may be any of the situations illustrated in Figures 2 to 4C, etc.

In an embodiment, the different characteristics of the protective device may include the arc time characteristics of the fast fuse, the action time of the IGBT, and the surge resistance of the three-phase diode bridge 523 connected in parallel with the AC-DC conversion unit 421.

In an embodiment, different strategies proposed for the power system 200 may include different protection strategies and corresponding specifications for devices of different levels.

In an embodiment, the control method of the pyro-fuse and/or the control method of the power system 200 based on the pyro-fuse may be implemented as hardware, software, firmware, and any combination thereof. For example, the pyro-fuse control unit 607 may include or be configured as multiple units, circuits, modules, or the like, each of which may be used to perform one or more steps of any of the methods described above.

In an embodiment, the control method of the pyro-fuse and/or the control method of the power system 200 based on the pyro-fuse described above may be implemented in a (non-temporary) computer-readable medium and/or computer program product comprising instructions that, when executed on a processing unit, cause the processing unit to perform one or more steps of any of the methods described above.

It should be recognized that the principles disclosed herein are not limited to the embodiments described herein, but may be modified and altered in practice without departing from the scope of the appended claims. The above embodiments may include undertaking only a subset of these features, undertaking different orders of these features, undertaking different combinations of these features, and/or undertaking additional features in addition to those explicitly listed. Therefore, the scope of the embodiments should be determined with reference to the full scope of the appended claims and their equivalents.

## Claims

1. A power system (200) based on pyro-fuse, comprising:
an alternating current - direct current (AC-DC) conversion system (102) configured to convert an AC power from a power grid (101) into a first DC power, and/or convert the first DC power into an AC power;
a direct current (DC) bus (103) configured to transmit the first DC power;
a direct current - direct current (DC-DC) conversion system (104) configured to convert the first DC power into a second DC power, and/or convert the second DC power into the first DC power; and
one or more pyro-fuses (205) arranged between the DC bus (103) and the AC-DC conversion system (102) and/or the DC-DC conversion system (104), wherein the pyro-fuse (205) disconnects the AC-DC conversion system (102) and/or the DC-DC conversion system (104) from the DC bus (103) when blown.

2. The power system (200) according to claim 1, further comprising:
an energy storage system (206) configured to store the first DC power from the DC bus (103) and/or supply power to the DC bus (103),
wherein the pyro-fuse (205) is arranged between the DC bus (103) and the energy storage system (206), and the pyro-fuse (205) disconnects the energy storage system (206) from the DC bus (103) when blown.

3. The power system (200) according to claim 1 or 2, wherein,
the pyro-fuse (205) is arranged on the DC bus (103); and/or
the pyro-fuse (205) is arranged on a coupling line between the DC bus (103) and the AC-DC conversion system (102), the DC-DC conversion system (104), or the energy storage system (206).

4. The power system (200) according to any one of claims 1 to 3, wherein the AC-DC conversion system (102) comprises a plurality of AC-DC conversion units (421) connected in parallel,
wherein, within the AC-DC conversion system (102), a unit protection device (422) is included on the DC bus (103) side of the AC-DC conversion unit (421), and the unit protection device (422) is a pyro-fuse (205), a general-purpose fuse, or a power semiconductor;
the power system (200) particularly further comprising:
a power bridge (523) connected in parallel with one or more of the AC-DC conversion units (421) and configured to bypass one or more of the AC-DC conversion units (421).

5. The power system (200) according to any one of claims 1 to 4, wherein the DC-DC conversion system (104) comprises a plurality of DC-DC conversion units (441) connected in parallel,
wherein, within the DC-DC conversion system (104), a unit protection device (422) is included on the DC bus (103) side of the DC-DC conversion unit (441), and the unit protection device (422) is a pyro-fuse (205), a general-purpose fuse, or a power semiconductor.

6. The power system (200) according to any one of claims 1 to 5, wherein the DC bus (103) comprises a positive DC bus (DC+) and a negative DC bus (DC-),
wherein the pyro-fuse (205) is arranged between the positive DC bus and the AC-DC conversion system (102) and/or the DC-DC conversion system (104), and/or between the negative DC bus and the AC-DC conversion system (102) and/or the DC-DC conversion system (104).

7. The power system (200) according to any one of claims 1 to 6, wherein,
the power system (200) comprises a plurality of AC-DC conversion systems (102), and/or
the power system (200) comprises a plurality of DC-DC conversion systems (104).

8. The power system (200) according to any one of claims 1 to 7, wherein,
the second DC power is used for charging electric vehicles;
the power system (200) is used for electric vehicle charging stations.

9. The power system (200) according to any one of claims 1 to 8, further comprising:
a current sensing unit (608) configured to detect an overcurrent state (723) at the pyro-fuse (205);
a pyro-fuse control unit (607) configured to generate a fuse signal (703) in response to the overcurrent state (723) received from the current sensing unit (608); and/or
a communication unit (609) configured to transmit the overcurrent state (723) and/or the fuse signal (703);
particularly wherein,
the pyro-fuse control unit (607) is a system controller (671) or communicates with a system controller (671), and/or
the communication unit (609) comprises a low-speed communication bus (691) and a high-speed communication bus (692).

10. A control method (1010, 1020) for a power system (200) based on pyro-fuse, wherein the power system (200) comprises one or more pyro-fuses (205) arranged between a DC bus (103) and an AC-DC conversion system (103) and/or a DC-DC conversion system (104), the method (1010, 1020) comprising:
receiving (1011) a trigger signal from a communication unit (609);
generating (1012) a fuse signal in response to the trigger signal; and
sending (1013) the fuse signal to the pyro-fuse (205).

11. The control method (1010, 1020) according to claim 10, wherein the trigger signal comprises: a system command (726), a fault logic state (725), and an overcurrent state (723, 724) sensed by a current sensing unit (608); and/or
wherein generating (1012) the fuse signal comprises:
applying (1023) a waiting time, after receiving (1011) the trigger signal from the communication unit; and
generating (1012) the fuse signal, if a trigger signal from the communication unit is received (1024) again after the waiting time.

12. The control method (1010, 1020) according to claim 10 or 11, wherein the control method (1010, 1020) is performed in a pyro-fuse control unit (607);
particularly wherein,
the pyro-fuse control unit (607) is a system controller (671) or communicates with a system controller (671), and/or
the communication unit (609) comprises a low-speed communication bus (691) and a high-speed communication bus (692).

13. A control apparatus (607) comprising:
a processing unit (801); and
a memory unit (802) having stored thereon instructions that, when executed on the processing unit (801), cause the processing unit (801) to be configured to perform the method (1010, 1020) according to any one of claims 10 to 12.

14. A computer-readable storage medium having stored thereon instructions that, when executed on a processing unit (801), cause the processing unit (801) to perform the method (1010, 1020) according to any one of claims 10 to 12.

15. A computer program product having stored thereon instructions that, when executed on a processing unit (801), cause the processing unit (801) to perform the method (1010, 1020) according to any one of claims 10 to 12.
